# EUROPÄISCHE PATENTANMELDUNG

(11) **EP 4 343 685 A1**
(43) Veröffentlichungstag der Anmeldung: **27.03.2024**
(21) Anmeldenummer: 22197288.8
(22) Anmeldetag: 23.09.2022
(51) Int. Cl.: G06T 7/00

(54) **BEREITSTELLEN EINES ERGEBNISDATENSATZES**

(71) Anmelder: Siemens Healthineers AG, 91301 Forchheim (DE)
(72) Erfinder: Birkhold, Annette, 70193 Stuttgart (DE); Kowarschik, Markus, 90408 Nürnberg (DE)
(74) Vertreter: Siemens Healthineers Patent Attorneys

(57) **Zusammenfassung**

Die Erfindung betrifft ein Verfahren zum Bereitstellen eines Ergebnisdatensatzes, umfassend:
- Erfassen von medizinischen Bilddaten,
wobei die medizinischen Bilddaten eine zeitliche Veränderung eines anatomischen Objekts in einem Untersuchungsobjekt räumlich und zeitlich aufgelöst abbilden,
- Identifizieren zumindest eines inhomogen deformierenden Bereichs des anatomischen Objekts anhand der Bilddaten,
- Bereitstellen des Ergebnisdatensatzes basierend auf den Bilddaten,
wobei der Ergebnisdatensatz eine dedizierte Abbildung und/oder zumindest einen Deformationsparameter des zumindest einen inhomogen deformierenden Bereichs aufweist.

Die Erfindung betrifft weiterhin ein Verfahren zum Bereitstellen einer trainierten Funktion, eine Bereitstellungseinheit, ein medizinisches Bildgebungsgerät und ein Computerprogrammprodukt.

## Beschreibung

Die Erfindung betrifft ein Verfahren zum Bereitstellen eines Ergebnisdatensatzes, ein Verfahren zum Bereitstellen einer trainierten Funktion, eine Bereitstellungseinheit, ein medizinisches Bildgebungsgerät und ein Computerprogrammprodukt.

Aneurysmen, beispielsweise ein intrakranielles Aneurysma, sind häufig asymptomatisch und weisen ein geringes Rupturrisiko auf. Nichtsdestoweniger verläuft eine Ruptur eines Aneurysmas für etwa die Hälfte aller Patienten tödlich. Basierend auf einer Größe und Position des Aneurysmas kann ein Risikowert (engl. risk score) für eine Ruptur des Aneurysmas bestimmt werden. Neben diesen klassischen Parametern, insbesondere der Größe und Position des Aneurysmas, kann eine Pulsatilität des Aneurysmas von Bedeutung für das Rupturrisiko sein. Aus den Druckschriften von Maupu et al., "Imaging Modalities for Intracranial Aneurysm: More Than Meets the Eye", 2022, Front. Cardiovasc. Med., 9:793072 und von Zhang et al., "Irregular pulsation of aneurysmal wall is associated with symptomatic and ruptured intracranial aneurysms", Journal of NeuroInterventional Surgery, Published Online First: 15 February 2022, ist beispielsweise bekannt, dass eine inhomogene Pulsation von Aneurysmen ein bedeutender dynamischer Parameter ist, da eine erhöhte Bewegung einer Hüllwand, insbesondere einer Gefäßwand des Aneurysmas, mit einer verminderten Stabilität der Hüllwand und einem erhöhten Rupturrisiko in Verbindung gebracht wird.

Oftmals umfasst die Pulsation drei Bewegungskomponenten: eine globale Pulsation des Aneurysmas, Bewegungen von fokalen Bereichen der Hüllwand, beispielsweise Aus- oder Einstülpungen (engl. bleb), und eine globale cerebral vaskuläre Bewegung während eines Herzzyklus. Zudem ist die Amplitude der Pulsationen gering und eine Pulsation ist nur von kurzer Dauer. Des Weiteren können Artefakte, beispielsweise Bildgebungsartefakte, die Erfassung nachteilig behindern. Aus der Druckschrift von Signorelli et al., "Biomechanical Characterization of Intracranial Aneurysm Wall: A Multiscale Study", World Neurosurgery, Volume 119, November 2018, p. e882-e889, ist zudem bekannt, dass Rupturen häufig in begrenzten Bereichen der Aneurysmen mit erhöhter elastischer Kapazität auftraten, während Bereiche ohne Ruptur eine erhöhte Steifigkeit aufwiesen.

Es ist daher die Aufgabe der vorliegenden Erfindung eine Erfassung inhomogen deformierender Bereiche eines anatomischen Objekts zu ermöglichen.

Die Aufgabe wird erfindungsgemäß gelöst durch den jeweiligen Gegenstand der unabhängigen Ansprüche. Vorteilhafte Ausführungsformen mit zweckmäßigen Weiterbildungen sind Gegenstand der Unteransprüche.

Nachstehend wird die erfindungsgemäße Lösung der Aufgabe sowohl in Bezug auf Verfahren und Vorrichtungen zum Bereitstellen eines Ergebnisdatensatzes als auch in Bezug auf Verfahren und Vorrichtungen zum Bereitstellen einer trainierten Funktion beschrieben. Hierbei können Merkmale, Vorteile und alternative Ausführungsformen von Datenstrukturen und/oder Funktionen bei Verfahren und Vorrichtungen zum Bereitstellen eines Ergebnisdatensatzes auf analoge Datenstrukturen und/oder Funktionen bei Verfahren und Vorrichtungen zum Bereitstellen einer trainierten Funktion übertragen werden. Analoge Datenstrukturen können hierbei insbesondere durch die Verwendung der Vorsilbe "Trainings" gekennzeichnet sein. Weiterhin können die in Verfahren und Vorrichtungen zum Bereitstellen eines Ergebnisdatensatzes verwendeten trainierten Funktionen insbesondere durch Verfahren und Vorrichtungen zum Bereitstellen einer trainierten Funktion angepasst und/oder bereitgestellt worden sein.

Die Erfindung betrifft in einem ersten Aspekt ein, insbesondere computerimplementiertes, Verfahren zum Bereitstellen eines Ergebnisdatensatzes. Dabei werden in einem ersten Schritt medizinische Bilddaten erfasst, welche eine Veränderung eines anatomischen Objekts in einem Untersuchungsobjekt räumlich und zeitlich aufgelöst abbilden. In einem weiteren Schritt wird zumindest ein inhomogen deformierender Bereich des anatomischen Objekts anhand der Bilddaten identifiziert. In einem weiteren Schritt wird der Ergebnisdatensatz basierend auf den Bilddaten bereitgestellt. Dabei weist der Ergebnisdatensatz eine dedizierte Abbildung und/oder zumindest einen Deformationsparameter des zumindest einen inhomogen deformierenden Bereichs auf. Die vorstehend beschriebenen Schritte des vorgeschlagenen Verfahrens können zumindest teilweise, insbesondere vollständig, computerimplementiert sein.

Das Erfassen der medizinischen Bilddaten kann ein Aufnehmen und/oder Empfangen der medizinischen Bilddaten umfassen. Vorteilhafterweise können die medizinischen Bilddaten mittels eines medizinischen Bildgebungsgeräts aufgenommen werden. Das Aufnehmen der Bilddaten kann mittels eines physiologischen Signals getriggert erfolgen, beispielsweise EKG-getriggert. Das medizinische Bildgebungsgerät zur Aufnahme der medizinischen Bilddaten kann als medizinisches Röntgengerät, insbesondere medizinisches C-Bogen-Röntgengerät und/oder Kegelstrahl-Computertomographieanlage (engl. cone-beam CT, CBCT), und/oder Computertomographie-Anlage (CT-Anlage) und/oder Magnetresonanztomographieanlage (MRT-Anlage) und/oder Positronenemissionstomographieanlage (PET-Anlage) und/oder Ultraschallgerät ausgebildet sein. Das Empfangen der medizinischen Bilddaten kann insbesondere ein Erfassen und/oder Auslesen eines computerlesbaren Datenspeichers und/oder ein Empfangen aus einer Datenspeichereinheit, beispielsweise einer Datenbank, umfassen. Ferner können die medizinischen Bilddaten von einer Bereitstellungseinheit des medizinischen Bildgebungsgeräts bereitgestellt werden.

Die medizinischen Bilddaten können eine zweidimensional (2D) und/oder dreidimensional (3D) räumlich und zeitlich aufgelöste Abbildung des anatomischen Objekts in dem Untersuchungsobjekt umfassen. Zudem können die medizinischen Bilddaten die Veränderung des anatomischen Objekts, beispielsweise eine Bewegung und/oder Deformation des anatomischen Objekts und/oder einen Kontrastmittelfluss in dem anatomischen Objekt, räumlich und zeitlich aufgelöst abbilden. Insbesondere können die medizinischen Bilddaten die Veränderung des anatomischen Objekts 2D und/oder 3D räumlich aufgelöst zu mehreren Aufnahmezeitpunkten abbilden. Die Veränderung des anatomischen Objekts kann zumindest teilweise, insbesondere vollständig, periodisch auftreten. Dabei können die medizinischen Bilddaten vorteilhafterweise zumindest eine Periode der Veränderung des anatomischen Objekts räumlich und zeitlich aufgelöst abbilden.

Das Untersuchungsobjekt kann beispielsweise eine menschliche und/oder tierische Patientin und/oder ein menschlicher und/oder tierischer Patient und/oder ein Untersuchungsphantom sein. Das anatomische Objekt kann ein Organ und/oder Gewebe, insbesondere ein Muskelgewebe und/oder Tumorgewebe, und/oder Hohlorgan, insbesondere einen Gefäßabschnitt, und/oder eine Gefäßmalformation, insbesondere ein Aneurysma, umfassen.

Vorteilhafterweise kann anhand der Bilddaten zumindest ein inhomogen deformierender Bereich, insbesondere mehrere inhomogen deformierende Bereiche, des anatomischen Objekts identifiziert werden. Der zumindest eine inhomogen deformierende Bereich kann eine von angrenzendem Gewebe des anatomischen Objekts abweichende Deformation, insbesondere Deformationsamplitude und/oder Deformationsrichtung und/oder Deformationsgeschwindigkeit und/oder Deformationsrate, aufweisen. Das anatomische Objekt kann eine Hüllwand aufweisen, beispielsweise eine Gewebegrenze und/oder Gefäßwand, welche das anatomische Objekt, insbesondere vollständig, umgibt. Dabei kann der zumindest eine inhomogen deformierende Bereich als lokale, insbesondere bläschenförmige, Aus- und/oder Einstülpung (engl. bleb) der Hüllwand des anatomischen Objekts identifiziert werden. Das Identifizieren des zumindest einen inhomogen deformierenden Bereichs des anatomischen Objekts kann manuell, beispielsweise durch manuelle Annotation der Bilddaten und/oder Herausstellen eines Volumens (engl. volume punching), und/oder automatisch, beispielsweise durch Anwenden eines Algorithmus zur Anomaliedetektion auf die Bilddaten und/oder durch Analyse von Zeitintensitätskurven, insbesondere Zeit-Dichte-Kurven (engl. time-density curves), von Bildpunkten der Bilddaten, erfolgen. Dabei kann vorteilhafterweise eine Abbildung des zumindest einen inhomogen deformierenden Bereichs, insbesondere der mehreren inhomogen deformierenden Bereiche, des anatomischen Objekts in den Bilddaten identifiziert, insbesondere annotiert, werden.

Der Ergebnisdatensatz wird basierend auf den Bilddaten bereitgestellt. Dabei kann der Ergebnisdatensatz eine dedizierte, insbesondere räumlich und/oder zeitlich begrenzte und/oder optimierte, Abbildung des zumindest einen inhomogen deformierenden Bereichs des anatomischen Objekts aufweisen. Die dedizierte Abbildung kann vorteilhafterweise basierend auf der Identifikation des zumindest einen inhomogen deformierenden Bereichs des anatomischen Objekts in den Bilddaten bereitgestellt werden. Beispielsweise kann die dedizierte Abbildung mit einer gegenüber den Bilddaten höheren räumlichen und/oder zeitlichen Auflösung und/oder auf den zumindest einen inhomogen deformierenden Bereich begrenzt und/oder einem für die Abbildung des zumindest einen deformierenden Bereichs optimierten Abbildungsparameter, beispielsweise einem Binning und/oder Kontrast, bereitgestellt werden.

Alternativ oder zusätzlich kann der Ergebnisdatensatz einen, insbesondere absoluten und/oder relativen, Deformationsparameter, beispielsweise eine Deformationsamplitude und/oder Deformationsrichtung und/oder Deformationsgeschwindigkeit und/oder Deformationsrate und/oder eine Positionierungsinformation, des zumindest einen inhomogen deformierenden Bereichs aufweisen. Dabei kann der Deformationsparameter die Deformation des zumindest einen inhomogen deformierenden Bereichs des anatomischen Objekts qualitativ und/oder quantitativ charakterisieren. Der relative Deformationsparameter kann bezüglich der Deformation eines Referenzbereichs, insbesondere eines homogen deformierenden Bereichs, des anatomischen Objekts bestimmt werden, beispielsweise als Differenz und/oder Verhältnis. Die Positionierungsinformation kann beispielsweise eine räumliche Position und/oder Ausrichtung und/oder ein geometrisches Merkmal, beispielsweise eine Kontur und/oder Fläche, des zumindest einen deformierenden Bereichs beschreiben.

Das Bereitstellen des Ergebnisdatensatzes basierend auf den Bilddaten kann ein Speichern auf einem computerlesbaren Speichermedium und/oder ein Anzeigen auf einer Darstellungseinheit und/oder ein Übertragen an eine Bereitstellungseinheit umfassen. Insbesondere kann eine graphische Darstellung des Ergebnisdatensatzes mittels der Darstellungseinheit angezeigt werden.

Vorteilhafterweise kann mittels des vorgeschlagenen Verfahrens eine Erfassung des zumindest einen inhomogen deformierenden Bereichs des anatomischen Objekts ermöglicht werden. Anhand des Ergebnisdatensatzes, insbesondere der dedizierten Abbildung und/oder des zumindest einen Deformationsparameters des zumindest einen inhomogen deformierenden Bereichs, kann ein medizinisches Bedienpersonal vorteilhaft bei einer Untersuchung und/oder Behandlung des anatomischen Objekts unterstützt werden. Vorzugsweise kann mittels des vorgeschlagenen Verfahrens anhand der Bilddaten, beispielsweise einer einzelnen 3D räumlich und zudem zeitlich aufgelösten Abbildung des anatomischen Objekts, eine Bewegung und/oder Deformation des anatomischen Objekts, beispielsweise der Hüllwand eines Aneurysmas und/oder eines Gefäßabschnitts, quantifiziert werden, insbesondere unmittelbar und effizient. Anhand des bereitgestellten Datensatzes kann eine nachfolgende Analyse der inhomogenen Deformation, insbesondere einer pulsatilen Bewegung, ermöglicht werden.

In einer weiteren vorteilhaften Ausführungsform des vorgeschlagenen Verfahrens kann eine Abbildung eines initialen Zustands des anatomischen Objekts in den Bilddaten identifiziert werden. Dabei kann jeweils ein Verschiebungsfeld für weitere, in den Bilddaten abgebildete, Zustände des anatomischen Objekts bezüglich des initialen Zustands bestimmt werden. Der Ergebnisdatensatz kann vorteilhafterweise zusätzlich basierend auf den Verschiebungsfeldern bereitgestellt werden.

Vorteilhafterweise kann der initiale Zustand durch einen vorgegebenen Veränderungszustand, insbesondere einen vorgegebenen Bewegungs- und/oder Deformationszustand, des anatomischen Objekts gekennzeichnet sein, beispielsweise einem minimalen, maximalen oder mittleren Veränderungszustand. Zudem können verschiedene Deformationszustände, insbesondere zumindest eine Periode von Deformationszuständen, des anatomischen Objekts in den Bilddaten räumlich und zeitlich aufgelöst abgebildet sein. Beispielsweise kann eine Abbildung des anatomischen Objekts, insbesondere des Gefäßabschnitts und/oder Aneurysmas, als Abbildung des initialen Zustands identifiziert werden, welche das anatomische Objekt aufweisend ein minimales Volumen abbildet. Dies kann vorteilhaft sein, da ein undeformierter Zustand des anatomischen Objekts in-vivo aufgrund einer Beladung zwischen systolischem und diastolischem Druck im Wesentlichen nicht vorkommt.

Ferner kann jeweils ein Verschiebungsfeld (engl. displacement field) für die weiteren Zustände des anatomischen Objekts bezüglich des initialen Zustands bestimmt werden, welche in den Bilddaten abgebildet sind. Insbesondere können die Verschiebungsfelder für eine Oberfläche und/oder die Hüllwand des anatomischen Objekts bestimmt werden. Dabei können die Verschiebungsfelder die Deformation des anatomischen Objekts bezüglich des initialen Zustands, insbesondere 2D und/oder 3D, räumlich aufgelöst für die Aufnahmezeitpunkte der Bilddaten kennzeichnen. Das Bestimmen der Verschiebungsfelder kann beispielsweise durch Anwenden einer projektionsbasierten digitalen Volumenkorrelation (engl. projection-based Digital Volume Correlation, P-DVC) mit einer kinematischen Regularisierung der Verschiebungsfelder erfolgen, wie beispielsweise bekannt aus der Druckschrift von Jailin et. al., "Projection-Based Measurement and Identification", Advancements in Optical Methods & Digital Image Correlation in Experimental Mechanics, 2020, Volume 3, Conference Proceedings of the Society for Experimental Mechanics Series, Springer, Cham, wobei anstelle eines statischen 3D Referenzbildes die Abbildung, insbesondere eine 3D-Abbildung, des initialen Zustands verwendet werden kann. Ausgehend von dem Aufnahmezeitpunkt des initialen Zustands können die Verschiebungsfelder in positiver und negativer zeitlicher Dimension bestimmt, insbesondere berechnet, werden. Hierdurch kann eine dynamische pulsatile Bewegung an dem anatomischen Objekt, insbesondere die inhomogene Deformation, mittels einer 3D-Abbildung der Veränderung an dem anatomischen Objekt bestimmt werden, wodurch beispielsweise eine Röntgendosis vorteilhaft reduziert werden kann.

Alternativ oder zusätzlich kann das Bestimmen der Verschiebungsfelder eine 3D-3D deformierbare Registrierung, beispielsweise eine SICLE-Registrierung (engl. small deformation inverse consistent linear elastic image registration) und Extraktion von Transformationsmatrizen umfassen. Alternativ oder zusätzlich kann das Bereitstellen des Ergebnisdatensatzes ein Anwenden eines angepassten Algorithmus zur Herzgefäßrekonstruktion (engl. Cardiac Vascular Reconstruction, CAVAREC) umfassen, der sich dadurch auszeichnet, dass iterativ ein nicht notwendigerweise periodisches, zeitabhängiges Verschiebungsfeld berechnet wird, welches die Bewegung des anatomischen Objekts während der Bildaufnahme beschreibt. Ein beispielhafter CAVAREC-Algorithmus ist beispielsweise aus der Druckschrift von Rohkohl et al., "Interventional 4D motion estimation and reconstruction of cardiac vasculature without motion periodicity assumption", Medical Image Analysis, Volume 14, Issue 5, 2010, Pages 687-694, bekannt.

Vorteilhafterweise kann das Bereitstellen des Ergebnisdatensatzes, insbesondere der dedizierten Abbildung und/oder des zumindest einen Deformationsparameters des zumindest einen inhomogen deformierenden Bereichs, zusätzlich auf den Verschiebungsfeldern basieren. Beispielsweise kann basierend auf den Verschiebungsfeldern eine räumlich und zeitlich aufgelöste Abbildung und/oder Repräsentation, beispielsweise ein kinematisches Modell, des anatomischen Objekts, insbesondere des Aneurysmas, bestimmt werden.

In einer weiteren vorteilhaften Ausführungsform des vorgeschlagenen Verfahrens kann der zumindest eine Deformationsparameter aufweisend jeweils einen Belastungstensor als Gradient der Verschiebungsfelder bestimmt werden.

Vorteilhafterweise kann jeweils ein Belastungstensor (engl. strain tensor) als räumlicher Gradient der Verschiebungsfelder bestimmt werden. Somit kann jeweils ein Belastungstensor zu jedem Aufnahmezeitpunkt der Bilddaten bestimmt werden, welche einen weiteren Zustand des anatomischen Objekts abbilden. Das Bestimmen der Belastungstensoren kann beispielsweise mittels eines Schiebefenster-Ansatzes (engl. sliding window approach) bestimmt werden. Die Belastungstensoren können dabei eine an dem anatomischen Objekt auftretende, insbesondere mechanische, Belastung, beispielsweise durch die Deformation und/oder Dehnung und/oder Stauchung, kennzeichnen, insbesondere quantifizieren. Zudem können die mehreren Belastungstensoren die an dem anatomischen Objekt auftretende Belastung räumlich und zeitlich aufgelöst abbilden.

Anhand der Belastungstensoren kann eine ortsaufgelöste Identifikation von Bereichen mit erhöhter, insbesondere mechanischer, Belastung, beispielsweise durch Einwirken von Druck- und/oder Zug- und/oder Scherkräften, an dem anatomischen Objekt, insbesondere der Hüllwand des anatomischen Objekts, ermöglicht werden.

In einer weiteren vorteilhaften Ausführungsform des vorgeschlagenen Verfahrens kann der zumindest eine Deformationsparameter aufweisend einen Maximalbelastungstensor, welcher für eine Hüllwand des anatomischen Objekts abbildende Bildpunkte der Bilddaten ein zeitliches Maximum einer, insbesondere mechanischen, Belastung der Hüllwand betrifft, und/oder Belastungsratentensoren als zeitliche Ableitung der Belastungstensoren bereitgestellt werden. Alternativ oder zusätzlich kann der zumindest eine Deformationsparameter aufweisend die Belastungsratentensoren als zeitliche Ableitung der Belastungstensoren und einen Maximalbelastungsratentensor, welcher für eine Hüllwand des anatomischen Objekts abbildende Bildpunkte der Bilddaten ein zeitliches Maximum einer Belastungsrate der Hüllwand betrifft, bereitgestellt werden.

Vorteilhafterweise kann für die Bildpunkte der Bilddaten, welche die Hüllwand des anatomischen Objekts abbilden, jeweils das zeitliche Maximum der Belastung der Hüllwand, insbesondere das zeitliche Maximum der Belastungstensoren, bestimmt werden, beispielsweise durch einen Vergleich von Werten der Belastungstensoren des jeweiligen Bildpunkts. Das zeitliche Maximum kann dabei ein Maximum der Werte der Belastungstensoren für einen Bildpunkt der Bilddaten bezeichnen, da jeder Belastungstensor mit jeweils einem Aufnahmezeitpunkt der Bilddaten korrespondiert. Die Bildpunkte der Bilddaten, welche das anatomische Objekt abbilden, können beispielsweise schwellwertbasiert und/oder anhand eines Anatomieatlas identifiziert werden. Vorteilhafterweise kann der Deformationsparameter aufweisend jeweils einen zeitlichen Maximalwert der Belastungstensoren für die Bildpunkte der Bilddaten bereitgestellt werden, welche Bildpunkte eine Hüllwand des anatomischen Objekts abbilden. Vorteilhafterweise kann der Ergebnisdatensatz, insbesondere der Deformationsparameter, aufweisend ein biomechanisches Modell des anatomischen Objekts, beispielsweise ein biomechanisches Aneurysmenmodell, bereitgestellt werden. Insbesondere kann der Deformationsparameter basierend auf den zeitlichen Maximalwerten der Belastungstensoren aufweisend einen 3D räumlich aufgelösten Datensatz, insbesondere eine bildhafte Darstellung, einer maximalen Dehnung der Hüllwand des anatomischen Objekts, bereitgestellt werden.

Alternativ oder zusätzlich können Belastungsratentensoren, insbesondere Tensoren der Belastungsrate, als zeitliche Ableitung der Belastungstensoren bereitgestellt werden. Zudem kann der Maximalbelastungsratentensor, welcher für die Hüllwand des anatomischen Objekts abbildende Bildpunkte der Bilddaten das zeitliche Maximum der Belastungsrate der Hüllwand betrifft, bestimmt werden, beispielsweise als zeitliches Maximum der Tensoren der Belastungsrate für die Bildpunkte der Bilddaten, welche Bildpunkte die Hüllwand des anatomischen Objekts abbilden. Vorteilhafterweise kann der Deformationsparameter aufweisend jeweils einen zeitlichen Maximalwert der Belastungsrate für die Bildpunkte der Bilddaten bereitgestellt werden, welche Bildpunkte die Hüllwand des anatomischen Objekts abbilden. Insbesondere kann der Deformationsparameter basierend auf den zeitlichen Maximalwerten der Belastungsraten aufweisend einen 3D räumlich aufgelösten Datensatz, insbesondere eine bildhafte Darstellung, einer maximalen Belastungsrate der Hüllwand des anatomischen Objekts, bereitgestellt werden.

Das Bereitstellen des Ergebnisdatensatzes kann vorteilhafterweise ein Anzeigen einer graphischen, insbesondere farbkodierten, Darstellung des zumindest einen Deformationsparameters umfassen. Die vorgeschlagene Ausführungsform kann eine verbesserte Identifikation struktureller Inhomogenitäten des anatomischen Objekts, insbesondere der Hüllwand des anatomischen Objekts, ermöglichen. Insbesondere kann eine graphische Darstellung des Maximalbelastungstensors und/oder Maximalbelastungsratentensors eine verbesserte Identifikation der strukturellen Inhomogenitäten des anatomischen Objekts, insbesondere der Hüllwand des anatomischen Objekts, ermöglichen.

In einer weiteren vorteilhaften Ausführungsform des vorgeschlagenen Verfahrens kann das Erfassen der medizinischen Bilddaten ein Aufnehmen mehrerer Projektionsabbildungen, insbesondere mehrerer Röntgenprojektionsabbildungen, umfassen, welche die Veränderung des anatomischen Objekts in dem Untersuchungsobjekt aus zumindest teilweise verschiedenen Projektionsrichtungen abbilden. Dabei kann eine Aufnahmerate zur Aufnahme der Projektionsabbildungen in Abhängigkeit einer Herzfrequenz und/oder Atemfrequenz des Untersuchungsobjekts angepasst sein. Zudem können die Projektionsrichtungen von jeweils benachbarten Projektionsabbildungen einen spitzen Winkel zueinander aufweisen. Ferner können die Bilddaten aus den Projektionsabbildungen rekonstruiert werden.

Vorteilhafterweise kann das medizinische Bildgebungsgerät zur Aufnahme der Bilddaten eine Quelle, insbesondere eine Röntgenquelle, und einen Detektor, insbesondere einen Röntgendetektor, aufweisen. Zum Aufnehmen der Projektionsabbildungen kann die Quelle ein Röntgenstrahlenbündel zur Beleuchtung des Untersuchungsobjekts, insbesondere des anatomischen Objekts, aussenden, welches Röntgenstrahlenbündel nach einer Wechselwirkung mit dem Untersuchungsobjekt, insbesondere dem anatomischen Objekt, mittels des Detektors detektiert wird. Dabei kann eine räumliche Auflösung der Projektionsabbildungen durch eine native Auflösung des Detektors, beispielsweise eines Flachdetektors, limitiert sein. Eine zeitliche Auflösung der Bilddaten kann durch eine Aufnahmerate des Sensors und/oder eine Rotationsgeschwindigkeit des Bildgebungsgeräts während der Aufnahme der Projektionsabbildungen limitiert sein. Vorteilhafterweise können die mehreren Projektionsabbildungen zu mehreren verschiedenen Aufnahmezeitpunkten aufgenommen werden. Dabei kann eine Aufnahmerate, insbesondere eine Frequenz der Aufnahmezeitpunkte, zur Aufnahme der Projektionsabbildungen in Abhängigkeit der Herzfrequenz, insbesondere eines Pulses, und/oder einer Atemfrequenz des Untersuchungsobjekts angepasst sein. Hierfür kann, insbesondere vor und/oder während der Aufnahme der Projektionsabbildungen, ein Signal eines Herzfrequenzsensors und/oder eines Atemsensors und/oder ein EKG-Signal empfangen werden. Des Weiteren können die Projektionsabbildungen die Veränderung des anatomischen Objekts in dem Untersuchungsobjekt aus zumindest teilweise, insbesondere vollständig, verschiedenen Projektionsrichtungen, insbesondere Angulationen, abbilden. Hierfür kann die Anordnung von Quelle und Detektor beweglich, insbesondere rotierbar, bezüglich des Untersuchungsobjekts gelagert sein. Dabei können jeweils benachbarte Projektionsabbildungen, insbesondere Projektionsabbildungen, welche direkt nacheinander aufgenommen werden, einen spitzen Winkel, insbesondere einen Winkel kleiner als 90 Grad, zueinander aufweisen. Die Projektionsabbildungen können beispielsweise einen Kontrastmittelfluss in dem anatomischen Objekt abbilden.

Die Bilddaten können vorteilhafterweise aus den mehreren Projektionsabbildungen rekonstruiert werden, beispielsweise mittels einer, insbesondere gefilterten, Rückprojektion. Die mehreren Projektionsabbildungen können das anatomische Objekt in einer ersten zeitlichen Phase, insbesondere einer Maskenphase, und in einer zweiten zeitlichen Phase, insbesondere einer Füllphase, abbilden, wobei während der zweiten zeitlichen Phase ein Kontrastmittel in dem anatomischen Objekt angeordnet ist, beispielsweise mittels einer digitalen Subtraktionsangiographie (DSA). Das Rekonstruieren der Bilddaten aus den Projektionsabbildungen kann eine Subtraktion der Projektionsabbildungen der Maskenphase von den Projektionsabbildungen der Füllphase umfassen. Zudem kann eine plausibilitätsbasierte Randbedingung für den Kontrastmittelfluss verwendet werden, um einen Zeitpunkt eines Einfließens des Kontrastmittels in das anatomische Objekt, beispielsweise eine Bolusankunftszeit, für die Bildpunkte, beispielsweise Voxel, der Bilddaten zu bestimmen. Zunächst kann ein Volumen des anatomischen Objekts, beispielsweise ein 3D-Gefäßvolumen, anhand der Bilddaten bestimmt werden. Ferner kann für die Voxel innerhalb des Volumens durch multiplikative Rückprojektion der einzelnen Projektionsabbildungen ein Intensitätsverlauf über die Zeit, insbesondere ein 4D-Wert, bestimmt werden.

Die Aufnahme der Projektionsabbildungen der Füllphase kann vorteilhafterweise mit einer geringen Rotationsgeschwindigkeit des medizinischen Bildgebungsgeräts erfolgen, beispielsweise 10 s für 200° Rotationswinkel. Vorteilhafterweise kann das Kontrastmittel während der Füllphase einen konsistenten Füllungsstatus in dem anatomischen Objekt aufweisen.

Die vorgeschlagene Ausführungsform kann eine zuverlässige und zugleich röntgendosiseffiziente Erfassung des zumindest einen inhomogen deformierenden Bereichs des anatomischen Objekts in den Projektionsabbildungen, insbesondere in Projektionsabbildungen eines einzelnen Rotationslaufs, ermöglichen.

In einer weiteren vorteilhaften Ausführungsform des vorgeschlagenen Verfahrens kann das Bereitstellen des Ergebnisdatensatzes eine Rekonstruktion der dedizierten Abbildung des zumindest einen inhomogen deformierenden Bereichs aus den Projektionsabbildungen umfassen. Dabei kann die Rekonstruktion räumlich und zeitlich auf den zumindest einen inhomogen deformierenden Bereich begrenzt werden.

Die dedizierte Abbildung des zumindest einen inhomogen deformierenden Bereichs kann, insbesondere analog zu den Bilddaten, aus den mehreren Projektionsabbildungen rekonstruiert werden, beispielsweise mittels einer, insbesondere gefilterten, Rückprojektion. Dabei kann die Rekonstruktion auf den zumindest einen inhomogen deformierenden Bereich räumlich und/oder zeitlich, insbesondere raumzeitlich, begrenzt sein. Ferner kann die Rekonstruktion der dedizierten Abbildung mit einer Voxelgröße erfolgen, welche im Vergleich zu einer räumlich und/oder zeitlich unbegrenzten Rekonstruktion kleiner ist. Zudem können vorteilhafterweise nur relevante Zeitschritte, dann jedoch mit maximaler zeitlicher Auflösung rekonstruiert werden. Hierdurch kann die dedizierte Abbildung auf den räumlich und/oder zeitlich relevanten Bereich begrenzt und besonders recheneffizient rekonstruiert werden. Zudem kann hierdurch eine verbesserte, insbesondere optimierte, räumliche und/oder zeitliche Auflösung der dedizierten Abbildung ermöglicht werden.

In einer weiteren vorteilhaften Ausführungsform des vorgeschlagenen Verfahrens kann ein Aufnahmeparameter zur dedizierten Abbildung des zumindest einen inhomogen deformierenden Bereichs basierend auf der Identifikation des zumindest einen inhomogen deformierenden Bereichs bestimmt werden. Dabei können weitere medizinische Bilddaten mittels des Aufnahmeparameters erfasst werden. Zudem kann der Ergebnisdatensatz zusätzlich basierend auf den weiteren Bilddaten bereitgestellt werden.

Der Aufnahmeparameter kann eine Aufnahmegeometrie, beispielsweise einen Abbildungsbereich (engl. field-of-view, FOV) und/ oder eine Projektionsrichtung und/oder Trajektorie und/oder Aufnahmepositionen und/oder Auflösung, insbesondere eine räumliche und/oder zeitliche Auflösung, und/oder einen Betriebsparameter, beispielsweise eine Röntgendosis und/oder Aufnahmerate, für das medizinische Bildgebungsgerät zur Aufnahme der weiteren medizinischen Bilddaten umfassen. Die weiteren medizinischen Bilddaten können insbesondere alle Merkmale und Eigenschaften aufweisen, welche in Bezug zu den medizinischen Bilddaten beschrieben wurden und umgekehrt. Vorteilhafterweise können die medizinischen Bilddaten und die weiteren medizinischen Bilddaten mittels desselben oder verschiedener medizinischer Bildgebungsgeräte aufgenommen werden.

Vorteilhafterweise kann der Aufnahmeparameter basierend auf der Identifikation des zumindest einen inhomogen deformierenden Bereichs des anatomischen Objekts bestimmt werden. Zudem kann der Aufnahmeparameter zusätzlich basierend auf einem weiteren Aufnahmeparameter zur Aufnahme der medizinischen Bilddaten bestimmt werden. Dabei kann der Aufnahmeparameter derart bestimmt werden, dass die weiteren medizinischen Bilddaten, welche mittels des Aufnahmeparameters erfasst werden, die dedizierte Abbildung des zumindest einen inhomogen deformierenden Bereichs aufweist. Beispielsweise kann der Aufnahmeparameter derart bestimmt werden, dass die dedizierte Abbildung eine gegenüber den medizinischen Bilddaten höhere räumliche und/oder zeitliche Auflösung und/oder auf den zumindest einen inhomogen deformierenden Bereich begrenzt und/ oder ein für die Abbildung des zumindest einen deformierenden Bereichs optimiertes Binning und/oder einen optimierten Kontrast aufweist. Insbesondere kann die zeitliche Auflösung der weiteren medizinischen Bilddaten an die Deformation, insbesondere eine Deformationsgeschwindigkeit, des zumindest einen inhomogen deformierenden Bereichs angepasst sein.

Vorteilhafterweise kann der Ergebnisdatensatz zusätzlich basierend auf den weiteren Bilddaten bereitgestellt werden. Dabei kann der Ergebnisdatensatz die dedizierte Abbildung des zumindest einen inhomogen deformierenden Bereichs des anatomischen Objekts aufweisen. Alternativ oder zusätzlich kann der Ergebnisdatensatz den Deformationsparameter aufweisen, welcher Deformationsparameter basierend auf den weiteren medizinischen Bilddaten oder basierend auf den medizinischen Bilddaten und den weiteren medizinischen Bilddaten bestimmt wird. Die weiteren Bilddaten können zumindest eine weitere Projektionsabbildung, insbesondere mehrere weitere Projektionsabbildungen, umfassen. Dabei kann das Bereitstellen des Ergebnisdatensatzes eine, insbesondere gefilterte, Rückprojektion der zumindest einen weiteren Projektionsabbildung auf die Bilddaten umfassen, insbesondere zur lokalen Verbesserung der Abbildung des zumindest einen inhomogen deformierenden Bereichs in den Bilddaten. Hierfür kann eine Synchronisation von Bewegungsmustern, welche in den Bilddaten und den weiteren Bilddaten abgebildet sind, beispielsweise mittels eines EKG-Signals, insbesondere EKG-getriggert, und/oder bildbasiert, vorteilhaft sein.

Hierdurch kann vorteilhaft eine verbesserte Erfassung des zumindest einen inhomogen deformierenden Bereichs ermöglicht werden.

In einer weiteren vorteilhaften Ausführungsform des vorgeschlagenen Verfahrens kann der Aufnahmeparameter zumindest eine Projektionsrichtung zur Aufnahme weiterer Projektionsabbildungen des zumindest einen inhomogen deformierenden Bereichs aufweisen. Zudem können die weiteren Bilddaten aus den weiteren Projektionsabbildungen rekonstruiert werden.

Vorteilhafterweise kann der Aufnahmeparameter die zumindest eine Projektionsrichtung, insbesondere mehrere verschiedene Projektionsrichtungen, zur Aufnahme mehrerer weiterer Projektionsabbildungen des zumindest einen inhomogen deformierenden Bereichs aufweisen. Dabei können die mehreren weiteren Projektionsabbildungen den zumindest einen inhomogen deformierenden Bereich aus der zumindest einen Projektionsrichtung, insbesondere aus den mehreren verschiedenen Projektionsrichtungen abbilden. Vorteilhafterweise kann die zumindest eine Projektionsrichtung derart bestimmt werden, dass die Deformation des zumindest einen inhomogen deformierenden Bereichs in der zumindest einen weiteren Projektionsabbildung abgebildet ist. Beispielsweise kann die zumindest eine Projektionsrichtung zur Aufnahme der weiteren Projektionsabbildungen abgewinkelt, insbesondere rechtwinklig, bezüglich einer, insbesondere resultierenden, Deformationsrichtung der Deformation des zumindest einen inhomogen deformierenden Bereichs angeordnet sein. Zudem können die Projektionsrichtungen von jeweils benachbarten weiteren Projektionsabbildungen einen spitzen Winkel zueinander aufweisen. Vorteilhafterweise können die weiteren Bilddaten, insbesondere analog zu den Bilddaten, aus den weiteren Projektionsabbildungen rekonstruiert werden.

Hierdurch kann vorteilhaft eine verbesserte Erfassung, insbesondere Abbildung, des zumindest einen inhomogen deformierenden Bereichs in der zumindest einen weiteren Projektionsabbildung ermöglicht werden.

In einer weiteren vorteilhaften Ausführungsform des vorgeschlagenen Verfahrens kann das anatomische Objekt ein Hohlorgan, beispielsweise eine Lunge und/oder ein Herz, und/oder einen Gefäßabschnitt, beispielsweise eine Arterie und/oder Vene, und/oder ein Aneurysma, beispielsweise ein Aortenaneurysma, und/oder ein Organ, beispielsweise eine Leber und/oder ein Gehirn, und/oder ein Gewebe, beispielsweise ein Muskelgewebe und/oder ein Tumorgewebe, aufweisen.

Dabei kann das anatomische Objekt insbesondere an einer Oberfläche, beispielsweise einer Gewebegrenze und/oder einer Hüllwand, den zumindest einen inhomogen deformierenden Bereich aufweisen. Insbesondere kann der zumindest eine inhomogen deformierende Bereich an der Oberfläche des anatomischen Objekts anhand der Bilddaten identifiziert werden. Die vorgeschlagene Ausführungsform kann vorteilhafterweise eine Erfassung des zumindest einen inhomogen deformierenden Bereichs an einem Hohlorgan und/oder Gefäßabschnitt und/oder Aneurysma und/oder Organ und/oder Gewebe des Untersuchungsobjekts ermöglichen.

In einer weiteren vorteilhaften Ausführungsform des vorgeschlagenen Verfahrens kann der zumindest eine inhomogen deformierende Bereich anhand von Zeitintensitätskurven von Bildpunkten der Bilddaten identifiziert werden, welche eine Hüllwand des anatomischen Objekts abbilden.

Vorteilhafterweise können die Bildpunkte der Bilddaten, welche die Hüllwand des anatomischen Objekts abbilden, jeweils eine Zeitintensitätskurve aufweisen. Dabei kann durch eine Analyse der Zeitintensitätskurven, beispielsweise durch einen Vergleich und/oder eine statistische Analyse der Zeitintensitätskurven, beispielsweise über einen vordefinierten Zeitabschnitt, der zumindest eine inhomogen deformierende Bereich des anatomischen Objekts identifiziert werden. Dabei kann der zumindest eine inhomogen deformierende Bereich des anatomischen Objekts beispielsweise anhand einer lokal erhöhten Amplitude von Intensitätsschwankungen der Zeitintensitätskurven identifiziert werden, insbesondere im Vergleich zu den übrigen Zeitintensitätskurven und/oder einer mittleren Amplitude der Intensitätsschwankungen der Zeitintensitätskurven. Zudem kann das Identifizieren des zumindest einen inhomogen deformierenden Bereichs des anatomischen Objekts zusätzlich durch Vergleich der Zeitintensitätskurven mit einer Herzrate und/oder Pulsrate, beispielsweise anhand eines EKG-Signals, erfolgen. Die vorgeschlagene Ausführungsform kann vorteilhaft eine präzise Identifikation des zumindest einen inhomogen deformierenden Bereichs ermöglichen.

In einer weiteren vorteilhaften Ausführungsform des vorgeschlagenen Verfahrens kann das Identifizieren des zumindest einen inhomogen deformierenden Bereichs des anatomischen Objekts ein Anwenden einer trainierten Funktion auf Eingabedaten umfassen. Dabei können die Eingabedaten auf den Bilddaten basieren. Ferner kann zumindest ein Parameter der trainierten Funktion basierend auf einem Vergleich zumindest eines inhomogen deformierenden Trainingsbereichs mit zumindest einem inhomogen deformierenden Vergleichsbereich angepasst sein.

Die trainierte Funktion kann vorteilhafterweise durch ein Verfahren des Maschinenlernens trainiert sein. Insbesondere kann die trainierte Funktion ein neuronales Netzwerk, insbesondere ein faltendes neuronales Netzwerk (engl. convolutional neural network, CNN) bzw. ein Netzwerk umfassend eine Faltungsschicht (engl. convolutional layer) sein.

Die trainierte Funktion bildet Eingabedaten auf Ausgabedaten ab. Hierbei könnend die Ausgabedaten insbesondere weiterhin von einem oder mehreren Parametern der trainierten Funktion abhängen. Der eine oder die mehreren Parameter der trainierten Funktion können durch ein Training bestimmt und/oder angepasst werden. Das Bestimmen und/oder das Anpassen des einen oder mehrerer Parameter der trainierten Funktion kann insbesondere auf einem Paar aus Trainingseingabedaten und zugehörigen Trainingsausgabedaten, insbesondere Vergleichsausgabedaten, basieren, wobei die trainierte Funktion zur Erzeugung von Trainingsabbildungsdaten auf die Trainingseingabedaten angewendet wird. Insbesondere können das Bestimmen und/oder das Anpassen auf einem Vergleich der Trainingsabbildungsdaten und/der Trainingsausgabedaten, insbesondere Vergleichsausgabedaten, basieren. Im Allgemeinen wird auch eine trainierbare Funktion, das heißt, eine Funktion mit noch nicht angepassten einen oder mehreren Parametern, als trainierte Funktion bezeichnet.

Andere Begriffe für trainierte Funktionen sind trainierte Abbildungsvorschrift, Abbildungsvorschrift mit trainierten Parametern, Funktion mit trainierten Parametern, Algorithmus basierend auf künstlicher Intelligenz, Algorithmus des maschinellen Lernens. Ein Beispiel für eine trainierte Funktion ist ein künstliches neuronales Netzwerk, wobei Kantengewichte des künstlichen neuronalen Netzwerks den Parametern der trainierten Funktion entsprechen. Anstatt des Begriffs "neuronales Netzwerk" kann auch der Begriff "neuronales Netz" verwendet werden. Insbesondere kann eine trainierte Funktion auf ein tiefes künstliches neuronales Netzwerk sein (engl. deep neuronal network, deep artificial neural network). Ein weiteres Beispiel für eine trainierte Funktion ist eine "Support Vector Machine", weiterhin sind auch insbesondere andere Algorithmen des maschinellen Lernens als trainierte Funktion einsetzbar.

Die trainierte Funktion kann insbesondere mittels einer Rückpropagation trainiert sein. Zunächst können Trainingsabbildungsdaten durch Anwendung der trainierten Funktion auf Trainingseingabedaten bestimmt werden. Hiernach kann eine Abweichung zwischen den Trainingsabbildungsdaten und den Trainingsausgabedaten, insbesondere den Vergleichsausgabedaten, durch Anwenden einer Fehlerfunktion auf die Trainingsabbildungsdaten und die Trainingsausgabedaten, insbesondere die Vergleichsausgabedaten, ermittelt werden. Ferner kann zumindest ein Parameter, insbesondere eine Gewichtung der trainierten Funktion iterativ angepasst werden. Hierdurch kann die Abweichung zwischen den Trainingsabbildungsdaten und den Trainingsausgabedaten, insbesondere den Vergleichsausgabedaten, während des Trainings der trainierten Funktion minimiert werden.

Vorteilhafterweise weist die trainierte Funktion, insbesondere das neuronale Netzwerk, eine Eingabeschicht und eine Ausgabeschicht auf. Dabei kann die Eingabeschicht zum Empfangen von Eingabedaten ausgebildet sein. Ferner kann die Ausgabeschicht zum Bereitstellen von Abbildungsdaten, insbesondere Ausgabedaten, ausgebildet sein. Dabei kann die Eingabeschicht und/oder die Ausgabeschicht jeweils mehrere Kanäle, insbesondere Neuronen, umfassen.

Die Eingabedaten der trainierten Funktion können auf den Bilddaten basieren. Insbesondere können die Eingabedaten der trainierten Funktion die Bilddaten umfassen. Ferner kann die trainierte Funktion die Identifikation, beispielsweise eine Lokalisation und/oder Annotation, des zumindest einen inhomogen deformierenden Bereichs des anatomischen Objekts als Ausgabedaten bereitstellen. Vorteilhafterweise kann zumindest ein Parameter der trainierten Funktion basierend auf dem Vergleich des zumindest einen inhomogen deformierenden Trainingsbereichs mit dem zumindest einen inhomogen deformierenden Vergleichsbereich angepasst sein. Insbesondere kann die trainierte Funktion durch eine Ausführungsform des vorgeschlagenen Verfahrens zum Bereitstellen einer trainierten Funktion bereitgestellt werden, welches im weiteren Verlauf beschrieben ist. Die vorgeschlagene Ausführungsform kann vorteilhaft eine recheneffiziente Identifikation des zumindest einen inhomogen deformierenden Bereichs ermöglichen.

Die Erfindung betrifft in einem zweiten Aspekt ein, insbesondere computerimplementiertes, Verfahren zum Bereitstellen einer trainierten Funktion. Dabei werden medizinische Trainingsbilddaten erfasst. Die medizinischen Trainingsbilddaten bilden eine zeitliche Veränderung eines anatomischen Trainingsobjekts in einem Trainingsuntersuchungsobjekt räumlich und zeitlich aufgelöst ab. In einem weiteren Schritt wird zumindest ein inhomogen deformierender Vergleichsbereich des anatomischen Trainingsobjekts anhand einer Nutzereingabe und/oder einer Annotation und/oder anhand von Zeitintensitätskurven von Bildpunkten der Trainingsbilddaten und/oder durch Anwenden eines Algorithmus zur Anomaliedetektion identifiziert. Der Algorithmus zur Anomaliedetektion kann beispielsweise eine Änderung einer Krümmung des anatomischen Objekts identifizieren, welche innerhalb eines vorgegebenen Zeitintervalls einen vorgegebenen Schwellwert überschreitet. In einem weiteren Schritt wird zumindest ein inhomogen deformierender Trainingsbereich des anatomischen Trainingsobjekts durch Anwenden der trainierten Funktion auf Eingabedaten identifiziert. Dabei basieren die Eingabedaten auf den Trainingsbilddaten. Ferner wird zumindest ein Parameter der trainierten Funktion durch einen Vergleich des zumindest einen anatomischen Trainingsbereichs mit dem zumindest einen anatomischen Vergleichsbereich angepasst. Hiernach wird die trainierte Funktion bereitgestellt.

Das Erfassen der medizinischen Trainingsbilddaten kann ein Aufnehmen und/oder Empfangen der medizinischen Trainingsbilddaten umfassen, insbesondere analog zum Erfassen der medizinischen Bilddaten. Zudem können die medizinischen Trainingsbilddaten simuliert sein. Die medizinischen Trainingsbilddaten und das anatomische Trainingsobjekt können jeweils alle Merkmale und Eigenschaften der medizinischen Bilddaten und des anatomischen Objekts aufweisen, welche in Bezug zum vorgeschlagenen Verfahren zum Bereitstellen eines Ergebnisdatensatzes beschrieben wurden und umgekehrt.

Der zumindest eine inhomogen deformierende Vergleichsbereich des anatomischen Trainingsobjekts kann anhand der Nutzereingabe und/oder der Annotation und/oder der Zeitintensitätskurven der Bildpunkte der Trainingsbilddaten und/oder durch Anwenden des Algorithmus zur Anomaliedetektion identifiziert werden. Die Nutzereingabe kann beispielsweise mittels einer Eingabeeinheit erfasst werden, beispielsweise einem Eingabedisplay und/oder einer Tastatur und/oder einem Zeigegerät und/oder einem Sensor zur Gesten- und/oder Spracherkennung. Der zumindest eine Vergleichsbereich kann manuell oder halbautomatisch, beispielsweise anhand der Nutzereingabe, oder vollautomatisch, beispielsweise durch das Anwenden des Algorithmus zur Anomaliedetektion, annotiert werden. Alternativ oder zusätzlich kann der zumindest eine Vergleichsbereich durch eine, insbesondere statistische, Analyse und/oder einen Vergleich der Zeitintensitätskurven der Bildpunkte der Trainingsbildpunkte identifiziert werden. Der Algorithmus zur Anomaliedetektion kann dazu ausgebildet sein, den zumindest einen Vergleichsbereich anhand einer lokal und/oder regional abweichenden Deformation, insbesondere Deformationsamplitude und/oder -richtung, zu identifizieren.

Vorteilhafterweise kann der zumindest eine inhomogen deformierende Trainingsbereich des anatomischen Objekts durch das Anwenden der trainierten Funktion auf die Eingabedaten identifiziert werden. Dabei können die Eingabedaten der trainierten Funktion auf den Trainingsbilddaten basieren, insbesondere die Trainingsbilddaten umfassen. Ferner kann die trainierte Funktion die Identifikation des zumindest einen inhomogen deformierenden Trainingsbereichs als Ausgabedaten bereitstellen.

Durch den Vergleich des zumindest einen inhomogen deformierenden Trainingsbereichs mit dem zumindest einen inhomogen deformierenden Vergleichsbereich kann der zumindest eine Parameter der trainierten Funktion angepasst werden. Der Vergleich kann ein Bestimmen einer Abweichung zwischen dem zumindest einen Trainingsbereich und dem zumindest einen Vergleichsbereich umfassen, insbesondere zwischen Daten- und/oder Bildpunkten der Bilddaten. Dabei kann der zumindest eine Parameter der trainierten Funktion vorteilhafterweise derart angepasst werden, dass die Abweichung minimiert wird. Das Anpassen des zumindest einen Parameters der trainierten Funktion kann ein Optimieren, insbesondere ein Minimieren, eines Kostenwerts einer Kostenfunktion umfassen, wobei die Kostenfunktion die Abweichung zwischen dem zumindest einen Trainingsbereich und dem zumindest einen Vergleichsbereich charakterisiert, insbesondere quantifiziert. Insbesondere kann das Anpassen des zumindest einen Parameters der trainierten Funktion eine Regression des Kostenwerts der Kostenfunktion umfassen. Das Bereitstellen der trainierten Funktion kann insbesondere ein Speichern auf einem computerlesbaren Speichermedium und/oder ein Übertragen an eine Bereitstellungseinheit umfassen.

Vorteilhafterweise kann mit dem vorgeschlagenen Verfahren eine trainierte Funktion bereitgestellt werden, welche in einer Ausführungsform des Verfahrens zum Bereitstellen eines Ergebnisdatensatzes verwendet werden kann.

Die Erfindung betrifft in einem dritten Aspekt eine Bereitstellungseinheit, welche dazu ausgebildet ist, ein vorgeschlagenes Verfahren zum Bereitstellen eines Ergebnisdatensatzes auszuführen.

Die Bereitstellungseinheit kann vorteilhafterweise eine Schnittstelle, eine Speichereinheit und/oder eine Recheneinheit umfassen. Die Bereitstellungseinheit kann dazu ausgebildet sein, ein Verfahren zum Bereitstellen eines Ergebnisdatensatzes auszuführen, indem die Schnittstelle, die Speichereinheit und/oder die Recheneinheit ausgebildet sind, die entsprechenden Verfahrensschritte auszuführen. Die Vorteile der vorgeschlagenen Bereitstellungseinheit entsprechen im Wesentlichen den Vorteilen des vorgeschlagenen Verfahrens zum Bereitstellen eines Ergebnisdatensatzes. Hierbei erwähnte Merkmale, Vorteile oder alternative Ausführungsformen können ebenso auch auf die anderen beanspruchten Gegenstände übertragen werden und umgekehrt.

Die Erfindung kann ferner eine Trainingseinheit betreffen, welche dazu ausgebildet ist, ein vorgeschlagenes Verfahren zum Bereitstellen einer trainierten Funktion auszuführen. Dabei kann die Trainingseinheit vorteilhafterweise eine Trainingsschnittstelle, eine Trainingsspeichereinheit und/oder eine Trainingsrecheneinheit umfassen. Die Trainingseinheit kann dazu ausgebildet sein, ein Verfahren zum Bereitstellen einer trainierten Funktion auszuführen, indem die Trainingsschnittstelle, die Trainingsspeichereinheit und/oder die Trainingsrecheneinheit dazu ausgebildet sind, die entsprechenden Verfahrensschritte auszuführen. Die Vorteile der vorgeschlagenen Trainingseinheit entsprechen im Wesentlichen den Vorteilen des vorgeschlagenen Verfahrens zum Bereitstellen einer trainierten Funktion. Hierbei erwähnte Merkmale, Vorteile oder alternative Ausführungsformen können ebenso auch auf die anderen beanspruchten Gegenstände übertragen werden und umgekehrt.

Die Erfindung betrifft in einem vierten Aspekt ein medizinisches Bildgebungsgerät, umfassend eine vorgeschlagene Bereitstellungseinheit. Dabei ist das medizinische Bildgebungsgerät zum Erfassen der medizinischen Bilddaten ausgebildet. Das medizinische Bildgebungsgerät kann als medizinisches Röntgengerät, insbesondere medizinisches C-Bogen-Röntgengerät und/oder Kegelstrahl-Computertomographieanlage, und/oder CT-Anlage und/oder MRT-Anlage und/oder PET-Anlage und/oder Ultraschallgerät ausgebildet sein. Die Vorteile des vorgeschlagenen Bildgebungsgeräts entsprechen im Wesentlichen den Vorteilen des vorgeschlagenen Verfahrens zum Bereitstellen eines Ergebnisdatensatzes. Hierbei erwähnte Merkmale, Vorteile oder alternative Ausführungsformen können ebenso auch auf die anderen beanspruchten Gegenstände übertragen werden und umgekehrt.

Die Erfindung betrifft in einem fünften Aspekt ein Computerprogrammprodukt mit einem Computerprogramm, welches direkt in einen Speicher einer Bereitstellungseinheit ladbar ist, mit Programmabschnitten, um alle Schritte des Verfahrens zum Bereitstellen eines Ergebnisdatensatzes und/oder eines seiner Aspekte auszuführen, wenn die Programmabschnitte von der Bereitstellungseinheit ausgeführt werden; und/oder welches direkt in einen Trainingsspeicher einer Trainingseinheit ladbar ist, mit Programmabschnitten, um alle Schritte eines vorgeschlagenen Verfahrens zum Bereitstellen einer trainierten Funktion und/oder eines seiner Aspekte auszuführen, wenn die Programmabschnitte von der Trainingseinheit ausgeführt werden.

Die Erfindung kann ferner ein Computerprogramm oder computerlesbares Speichermedium betreffen, umfassend eine trainierte Funktion, welche durch ein vorgeschlagenes Verfahren oder eines seiner Aspekte bereitgestellt wurde.

Eine weitgehend softwaremäßige Realisierung hat den Vorteil, dass schon bisher verwendete Bereitstellungseinheiten und/ oder Trainingseinheiten auf einfache Weise durch ein Software-Update nachgerüstet werden können, um auf die erfindungsgemäße Weise zu arbeiten. Ein solches Computerprogrammprodukt kann neben dem Computerprogramm gegebenenfalls zusätzliche Bestandteile wie zum Beispiel eine Dokumentation und/oder zusätzliche Komponenten, sowie Hardware-Komponenten, wie zum Beispiel Hardware-Schlüssel (Dongles etc.) zur Nutzung der Software, umfassen.

Ausführungsbeispiele der Erfindung sind in den Zeichnungen dargestellt und werden im Folgenden näher beschrieben. In unterschiedlichen Figuren werden für gleiche Merkmale die gleichen Bezugszeichen verwendet. Es zeigen:
- Fig. 1 und Fig. 6 bis 8: schematische Darstellungen verschiedener vorteilhafter Ausführungsformen eines Verfahrens zum Bereitstellen eines Ergebnisdatensatzes,
- Fig. 2 und 3: schematische Darstellungen des anatomischen Objekts zu verschiedenen Zeitpunkten,
- Fig. 4 und 5: schematische Darstellungen von Zeitintensitätskurven von homogen und inhomogen deformierenden Bereichen eines anatomischen Objekts,
- Fig. 9 eine: schematische Darstellung einer vorteilhaften Ausführungsform eines Verfahrens zum Bereitstellen einer trainierten Funktion,
- Fig. 10: eine schematische Darstellung einer Bereitstellungseinheit,
- Fig. 11: eine schematische Darstellung einer Trainingseinheit,
- Fig. 12: eine schematische Darstellung eines medizinischen Bildgebungsgeräts.

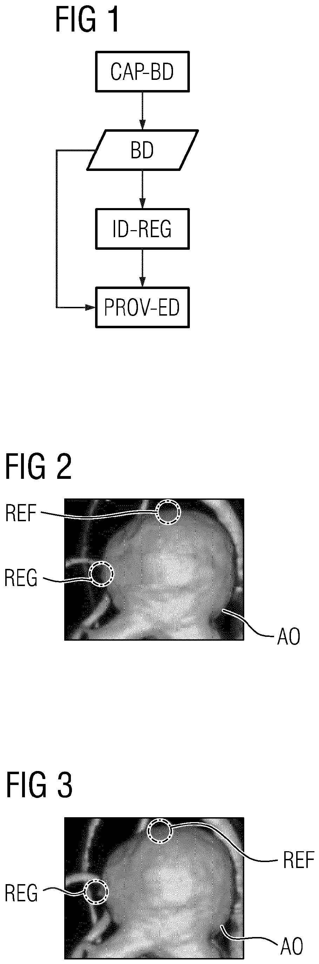

In Fig. 1 ist eine vorteilhafte Ausführungsform eines vorgeschlagenen Verfahrens zum Bereitstellen PROV-ED eines Ergebnisdatensatzes schematisch dargestellt. Dabei können medizinische Bilddaten BD erfasst werden CAP-BD, welche eine Veränderung eines anatomischen Objekts in einem Untersuchungsobjekt räumlich und zeitlich aufgelöst abbilden. Dabei kann das anatomische Objekt ein Hohlorgan und/oder einen Gefäßabschnitt und/oder ein Aneurysma und/oder ein Organ und/oder ein Gewebe aufweisen. Ferner kann zumindest ein inhomogen deformierender Bereich REG des anatomischen Objekts anhand der Bilddaten BD identifiziert werden ID-REG. Zudem kann der Ergebnisdatensatz basierend auf den Bilddaten BD bereitgestellt werden PROV-ED. Dabei kann der Ergebnisdatensatz eine dedizierte Abbildung und/oder zumindest einen Deformationsparameter des zumindest einen inhomogen deformierenden Bereichs REG aufweisen.

Das Erfassen CAP-BD der medizinischen Bilddaten BD kann ein Aufnehmen mehrerer Projektionsabbildungen umfassen, welche die Veränderung des anatomischen Objekts in dem Untersuchungsobjekt aus zumindest teilweise verschiedenen Projektionsrichtungen abbilden. Dabei kann eine Aufnahmerate zur Aufnahme der Projektionsabbildungen in Abhängigkeit einer Herzfrequenz und/oder Atemfrequenz des Untersuchungsobjekts angepasst sein. Zudem können die Projektionsrichtungen von jeweils benachbarten Projektionsabbildungen einen spitzen Winkel zueinander aufweisen. Ferner können die Bilddaten BD aus den Projektionsabbildungen rekonstruiert werden. Vorteilhafterweise kann das Bereitstellen PROV-ED des Ergebnisdatensattes eine Rekonstruktion der dedizierten Abbildung des zumindest einen inhomogen deformierenden Bereichs REG aus den Projektionsabbildungen umfassen. Dabei kann die Rekonstruktion räumlich und zeitlich auf den zumindest einen inhomogen deformierenden Bereich REG begrenzt werden. Zudem kann der zumindest eine inhomogen deformierende Bereich REG des anatomischen Objekts anhand von Zeitintensitätskurven von Bildpunkten der Bilddaten BD identifiziert werden, welche eine Hüllwand des anatomischen Objekts abbilden.

Fig. 2 und 3 zeigen schematische Darstellungen des anatomischen Objekts AO zu verschiedenen, insbesondere aufeinanderfolgenden, Zeitpunkten. In Fig. 2 und 3 sind jeweils zwei Interessensregionen (engl. region-of-interest, ROI) des anatomischen Objekts AO dargestellt. Dabei markiert REF einen homogen und REG den inhomogen deformierenden Bereich des anatomischen Objekts AO. Der inhomogen deformierende Bereich REG weist in Fig. 3 gegenüber Fig. 2 eine Ausstülpung auf, während der homogen deformierende Bereich REF nahezu unverändert ist.

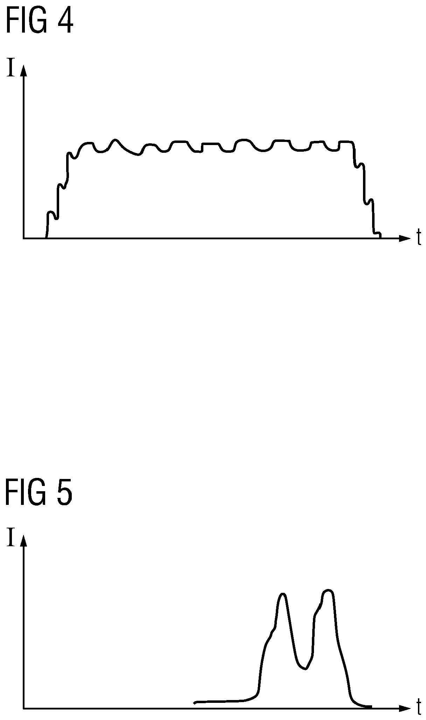

Fig. 4 zeigt eine schematische Darstellung einer Zeitintensitätskurve I(t) des homogen deformierenden Bereichs REF des anatomischen Objekts AO. Ferner ist in Fig. 5 eine Zeitintensitätskurve I(t) des inhomogen deformierenden Bereichs REG des anatomischen Objekts AO schematisch dargestellt. Die in Fig. 4 dargestellte Zeitintensitätskurve I(t) weist einen initialen Anstieg und finalen Abstieg auf, wobei dazwischen nur geringe und homogene Schwankungen, insbesondere Pulsationen, auftreten. Im Gegensatz dazu weist die in Fig. 5 dargestellte Zeitintensitätskurve I(t) eine vergleichsweise starke und inhomogene Schwankung, insbesondere Pulsation, auf.

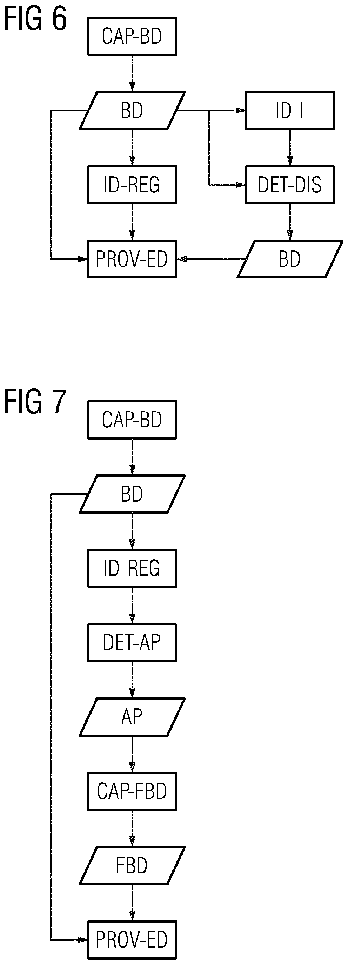

Fig. 6 zeigt eine schematische Darstellung einer weiteren vorteilhaften Ausführungsform eines vorgeschlagenen Verfahrens zum Bereitstellen PROV-ED eines Ergebnisdatensatzes. Dabei kann eine Abbildung eines initialen Zustands des anatomischen Objekts in den Bilddaten BD identifiziert werden ID-I. Ferner kann jeweils ein Verschiebungsfeld für weitere, in den Bilddaten BD abgebildete, Zustände des anatomischen Objekts bezüglich des initialen Zustands bestimmt werden DET-DIS. Dabei kann der Ergebnisdatensatz zusätzlich basierend auf den Verschiebungsfeldern bereitgestellt werden PROV-ED.

Vorteilhafterweise kann der zumindest eine Deformationsparameter aufweisend jeweils einen Belastungstensor als Gradient der Verschiebungsfelder bestimmt werden. Zudem kann der zumindest eine Deformationsparameter aufweisend:
- einen Maximalbelastungstensor, welcher für eine Hüllwand des anatomischen Objekts AO abbildende Bildpunkte der Bilddaten BD ein zeitliches Maximum einer Belastung der Hüllwand betrifft, und/oder
- Belastungsratentensoren als zeitliche Ableitung der Belastungstensoren und/oder
- Belastungsratentensoren als zeitliche Ableitung der Belastungstensoren und einen Maximalbelastungsratentensor, welcher für eine Hüllwand des anatomischen Objekts AO abbildende Bildpunkte der Bilddaten BD ein zeitliches Maximum einer Belastungsrate der Hüllwand betrifft,
bereitgestellt werden.

In Fig. 7 ist eine weitere vorteilhafte Ausführungsform des Verfahrens zum Bereitstellen PROV-ED eines Ergebnisdatensatzes schematisch dargestellt. Dabei kann ein Aufnahmeparameter AP zur dedizierten Abbildung des zumindest einen inhomogen deformierenden Bereichs REG bestimmt werden. Zudem können weitere medizinische Bilddaten FBD mittels des Aufnahmeparameters AP erfasst werden CAP-FBD. Dabei kann der Ergebnisdatensatz zusätzlich basierend auf den weiteren Bilddaten FBD bereitgestellt werden PROV-ED. Vorteilhafterweise kann der Aufnahmeparameter AP zumindest eine Projektionsrichtung zur Aufnahme weiterer Projektionsabbildungen des zumindest einen inhomogen deformierenden Bereichs REG aufweisen. Dabei können die weiteren Bilddaten FBD aus den weiteren Projektionsabbildungen rekonstruiert werden.

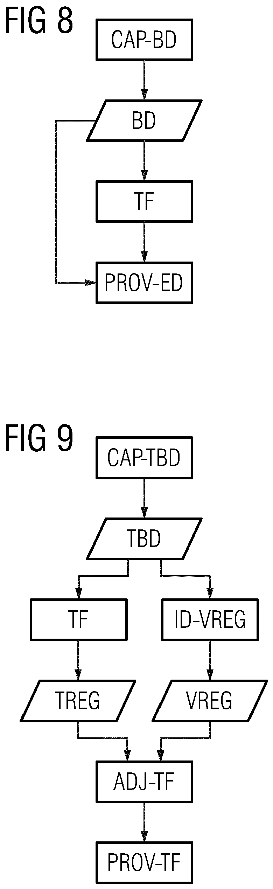

Fig. 8 zeigt eine schematische Darstellung einer weiteren vorteilhaften Ausführungsform eines vorgeschlagenen Verfahrens zum Bereitstellen PROV-ED eines Ergebnisdatensatzes. Dabei kann das Identifizieren des zumindest einen inhomogen deformierenden Bereichs REG ein Anwenden einer trainierten Funktion TF auf Eingabedaten umfassen, welche auf den Bilddaten BD basieren. Zudem kann zumindest ein Parameter der trainierten Funktion TF basierend auf einem Vergleich zumindest eines inhomogen deformierenden Trainingsbereichs mit zumindest einem inhomogen deformierenden Vergleichsbereich angepasst sein.

Fig. 9 zeigt eine schematische Darstellung einer vorteilhaften Ausführungsform eines vorgeschlagenen Verfahrens zum Bereitstellen PROV-TF einer trainierten Funktion TF. Dabei können medizinische Trainingsbilddaten TBD erfasst werden CAP-TBD, welche eine Veränderung eines anatomischen Trainingsobjekts in einem Trainingsuntersuchungsobjekt räumlich und zeitlich aufgelöst abbilden. Ferner kann zumindest ein inhomogen deformierender Vergleichsbereich VREG des anatomischen Trainingsobjekts anhand einer Nutzereingabe und/oder einer Annotation und/oder anhand von Zeitintensitätskurven von Bildpunkten der Trainingsbilddaten TBD und/oder durch Anwenden eines Algorithmus zur Anomaliedetektion identifiziert werden ID-VREG. Zudem kann zumindest ein inhomogen deformierender Trainingsbereich TREG des anatomischen Trainingsobjekts durch Anwenden der trainierten Funktion TF auf Eingabedaten identifiziert werden, welche auf den Trainingsbilddaten TBD basieren. Hiernach kann zumindest ein Parameter der trainierten Funktion TF durch einen Vergleich des zumindest einen inhomogen deformierenden Trainingsbereichs TREG mit dem zumindest einen inhomogen deformierenden Vergleichsbereich VREG angepasst werden ADJ-TF. Hiernach kann die trainierte Funktion bereitgestellt werden PROV-TF.

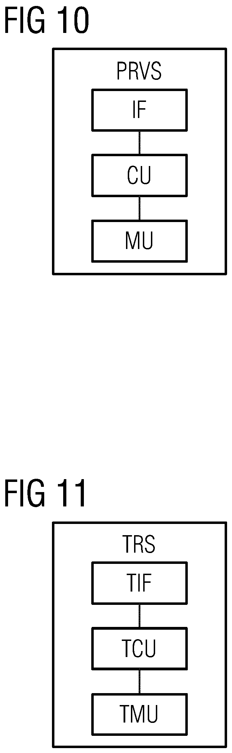

Fig. 10 zeigt eine schematische Darstellung einer Bereitstellungseinheit PRVS. Dabei kann die Bereitstellungseinheit PRVS eine Recheneinheit CU, eine Speichereinheit MU und/oder eine Schnittstelle IF umfassen. Die Bereitstellungseinheit PRVS kann dazu ausgebildet sein, ein vorgeschlagenes Verfahren zum Bereitstellen PROV-ED eines Ergebnisdatensatzes auszuführen, in dem die Schnittstelle IF, die Recheneinheit CU und/oder die Speichereinheit MU dazu ausgebildet sind, die entsprechenden Verfahrensschritte auszuführen.

In Fig. 11 ist eine beispielhafte Trainingseinheit TRS schematisch dargestellt. Dabei kann die Trainingseinheit TRS vorteilhafterweise eine Trainingsschnittstelle TIF, eine Trainingsspeichereinheit TMU und/oder eine Trainingsrecheneinheit TCU umfassen. Die Trainingseinheit TRS kann dazu ausgebildet sein, ein Verfahren zum Bereitstellen PROV-TF einer trainierten Funktion TF auszuführen, indem die Trainingsschnittstelle TIF, die Trainingsspeichereinheit TMU und/oder die Trainingsrecheneinheit TCU dazu ausgebildet sind, die entsprechenden Verfahrensschritte auszuführen.

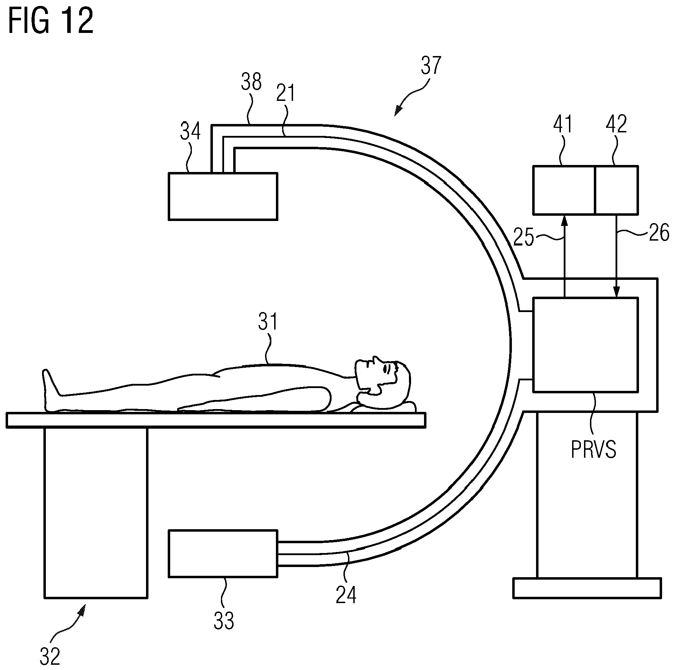

In Fig. 12 ist beispielhaft für ein medizinisches Bildgebungsgerät ein medizinisches C-Bogen-Röntgengerät 37, umfassend eine vorgeschlagene Bereitstellungseinheit PRVS dargestellt. Das medizinische C-Bogen-Röntgengerät 37 kann vorteilhafterweise einen Detektor 34, insbesondere einen Röntgendetektor, und eine Quelle 33, insbesondere eine Röntgenquelle, aufweisen, welche in definierter Anordnung an einem C-Arm 38 angeordnet sind. Der C-Arm 38 des C-Bogen-Röntgengeräts 37 kann beweglich um ein oder mehrere Achsen herum gelagert sein. Zur Aufnahme der medizinischen Bilddaten BD des, auf einer Patientenlagerungsvorrichtung 32 positionierten, Untersuchungsobjekt 31, kann die Bereitstellungseinheit PRVS ein Signal 24 an die Röntgenquelle 33 senden. Daraufhin kann die Röntgenquelle 33 ein Röntgenstrahlenbündel aussenden. Beim Auftreffen des Röntgenstrahlenbündels, nach einer Wechselwirkung mit dem Untersuchungsobjekt 31, auf einer Oberfläche des Detektors 34, kann der Detektor 34 ein Signal 21 an die Bereitstellungseinheit PRVS senden. Die Bereitstellungseinheit PRVS kann anhand des Signals 21 die medizinischen Bilddaten BD erfassen CAP-BD.

Das System kann ferner eine Eingabeeinheit 42, beispielsweise eine Tastatur, und eine Darstellungseinheit 41, beispielsweise einen Monitor und/oder ein Display und/oder einen Projektor, aufweisen. Die Eingabeeinheit 42 kann vorzugsweise in die Darstellungseinheit 41 integriert sein, beispielsweise bei einem kapazitiven und/oder resistiven Eingabedisplay. Die Eingabeeinheit 42 kann vorteilhafterweise zur Erfassung einer Nutzereingabe ausgebildet sein. Hierfür kann die Eingabeeinheit 42 beispielsweise ein Signal 26 an die Bereitstellungseinheit PRVS senden. Die Bereitstellungseinheit PRVS kann dazu ausgebildet sein, in Abhängigkeit der Nutzereingabe, insbesondere des Signals 26, gesteuert zu werden, insbesondere zur Ausführung eines Verfahrens zum Bereitstellen eines Ergebnisdatensatzes PROV-ED. Die Darstellungseinheit 41 kann vorteilhafterweise dazu ausgebildet sein, eine graphische Darstellung der Bilddaten BD und/oder des Ergebnisdatensatzes, insbesondere der dedizierten Abbildung und/oder des Deformationsparameters, anzuzeigen. Hierfür kann die Bereitstellungseinheit PRVS ein Signal 25 an die Darstellungseinheit 41 senden.

Die in den beschriebenen Figuren enthaltenen schematischen Darstellungen bilden keinerlei Maßstab oder Größenverhältnisse ab.

Es wird abschließend noch einmal darauf hingewiesen, dass es sich bei den vorhergehenden detailliert beschriebenen Verfahren sowie bei den dargestellten Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Element" nicht aus, dass die betreffenden Komponenten aus mehreren zusammenwirkenden Teil-Komponenten bestehen, die gegebenenfalls auch räumlich verteilt sein können.

Der Ausdruck "basierend auf" kann im Kontext der vorliegenden Anmeldung insbesondere im Sinne des Ausdrucks "unter Verwendung von" verstanden werden. Insbesondere schließt eine Formulierung, der zufolge ein erstes Merkmal basierend auf einem zweiten Merkmal erzeugt (alternativ: ermittelt, bestimmt etc.) wird, nicht aus, dass das erste Merkmal basierend auf einem dritten Merkmal erzeugt (alternativ: ermittelt, bestimmt etc.) werden kann.

## Patentansprüche

1. Verfahren zum Bereitstellen (PROV-ED) eines Ergebnisdatensatzes, umfassend:
- Erfassen (CAP-BD) von medizinischen Bilddaten (BD),
wobei die medizinischen Bilddaten (BD) eine Veränderung eines anatomischen Objekts (AO) in einem Untersuchungsobjekt (31) räumlich und zeitlich aufgelöst abbilden,
- Identifizieren (ID-REG) zumindest eines inhomogen deformierenden Bereichs (REG) des anatomischen Objekts (AO) anhand der Bilddaten (BD),
- Bereitstellen (PROV-ED) des Ergebnisdatensatzes basierend auf den Bilddaten (BD),
wobei der Ergebnisdatensatz eine dedizierte Abbildung und/oder zumindest einen Deformationsparameter des zumindest einen inhomogen deformierenden Bereichs (REG) aufweist.

2. Verfahren nach Anspruch 1,
wobei eine Abbildung eines initialen Zustands des anatomischen Objekts (AO) in den Bilddaten (BD) identifiziert wird (ID-I),
wobei jeweils ein Verschiebungsfeld für weitere, in den Bilddaten (BD) abgebildete, Zustände des anatomischen Objekts (AO) bezüglich des initialen Zustands bestimmt wird (DET-DIS),
wobei der Ergebnisdatensatz zusätzlich basierend auf den Verschiebungsfeldern bereitgestellt wird (PROV-ED).

3. Verfahren nach Anspruch 2,
wobei der zumindest eine Deformationsparameter aufweisend jeweils einen Belastungstensor als Gradient der Verschiebungsfelder bestimmt wird.

4. Verfahren nach Anspruch 3,
wobei der zumindest eine Deformationsparameter aufweisend:
- einen Maximalbelastungstensor, welcher für eine Hüllwand des anatomischen Objekts (AO) abbildende Bildpunkte der Bilddaten (BD) ein zeitliches Maximum einer Belastung der Hüllwand betrifft, und/oder
- Belastungsratentensoren als zeitliche Ableitung der Belastungstensoren und/oder
- Belastungsratentensoren als zeitliche Ableitung der Belastungstensoren und einen Maximalbelastungsratentensor, welcher für eine Hüllwand des anatomischen Objekts (AO) abbildende Bildpunkte der Bilddaten (BD) ein zeitliches Maximum einer Belastungsrate der Hüllwand betrifft,
bereitgestellt wird.

5. Verfahren nach einem der vorangehenden Ansprüche,
wobei das Erfassen (CAP-BD) der medizinischen Bilddaten (BD) ein Aufnehmen mehrerer Projektionsabbildungen umfasst, welche die Veränderung des anatomischen Objekts (AO) in dem Untersuchungsobjekt (31) aus zumindest teilweise verschiedenen Projektionsrichtungen abbilden,
wobei eine Aufnahmerate zur Aufnahme der Projektionsabbildungen in Abhängigkeit einer Herzfrequenz und/oder Atemfrequenz des Untersuchungsobjekts (31) angepasst ist,
wobei die Projektionsrichtungen von jeweils benachbarten Projektionsabbildungen einen spitzen Winkel zueinander aufweisen,
wobei die Bilddaten (BD) aus den Projektionsabbildungen rekonstruiert werden.

6. Verfahren nach Anspruch 5,
wobei das Bereitstellen (PROV-ED) des Ergebnisdatensatzes eine Rekonstruktion der dedizierten Abbildung des zumindest einen inhomogen deformierenden Bereichs (REG) aus den Projektionsabbildungen umfasst,
wobei die Rekonstruktion räumlich und zeitlich auf den zumindest einen inhomogen deformierenden Bereich (REG) begrenzt wird.

7. Verfahren nach einem der vorangehenden Ansprüche,
wobei ein Aufnahmeparameter (AP) zur dedizierten Abbildung des zumindest einen inhomogen deformierenden Bereichs (REG) basierend auf der Identifikation des zumindest eines inhomogen deformierenden Bereichs (REG) bestimmt wird (DET-AP), wobei weitere medizinische Bilddaten (FBD) mittels des Aufnahmeparameters (AP) erfasst werden (CAP-FBD),
wobei der Ergebnisdatensatz zusätzlich basierend auf den weiteren Bilddaten (FBD) bereitgestellt wird (PROV-ED).

8. Verfahren nach Anspruch 7,
wobei der Aufnahmeparameter (AP) zumindest eine Projektionsrichtung zur Aufnahme weiterer Projektionsabbildungen des zumindest einen inhomogen deformierenden Bereichs (REG) aufweist,
wobei die weiteren Bilddaten (FBD) aus den weiteren Projektionsabbildungen rekonstruiert werden.

9. Verfahren nach einem der vorangehenden Ansprüche,
wobei das anatomische Objekt ein Hohlorgan und/oder einen Gefäßabschnitt und/oder ein Aneurysma und/oder ein Organ und/oder ein Gewebe aufweist.

10. Verfahren nach Anspruch 9,
wobei der zumindest eine inhomogen deformierende Bereich des anatomischen Objekts anhand von Zeitintensitätskurven von Bildpunkten der Bilddaten (BD) identifiziert wird (ID-REG), welche eine Hüllwand des anatomischen Objekts abbilden.

11. Verfahren nach einem der vorangehenden Ansprüche,
wobei das Identifizieren (ID-REG) des zumindest einen inhomogen deformierenden Bereichs (REG) des anatomischen Objekts ein Anwenden einer trainierten Funktion (TF) auf Eingabedaten umfasst,
wobei die Eingabedaten auf den Bilddaten (BD) basieren, wobei zumindest ein Parameter der trainierten Funktion (TF) basierend auf einem Vergleich zumindest eines inhomogen deformierenden Trainingsbereichs (TREG) mit zumindest einem inhomogen deformierenden Vergleichsbereich (VREG) angepasst ist.

12. Verfahren zum Bereitstellen (PROV-TF) einer trainierten Funktion (TF), umfassend:
- Erfassen (CAP-TBD) von medizinischen Trainingsbilddaten (TBD),
wobei die medizinischen Trainingsbilddaten (TBD) eine Veränderung eines anatomischen Trainingsobjekts in einem Trainingsuntersuchungsobjekt räumlich und zeitlich aufgelöst abbilden,
- Identifizieren (ID-VREG) zumindest eines inhomogen deformierenden Vergleichsbereichs (VREG) des anatomischen Trainingsobjekts anhand einer Nutzereingabe und/oder einer Annotation und/oder anhand von Zeitintensitätskurven von Bildpunkten der Trainingsbilddaten (TBD) und/oder durch Anwenden eines Algorithmus zur Anomaliedetektion,
- Identifizieren zumindest eines inhomogen deformierenden Trainingsbereichs (TREG) des anatomischen Trainingsobjekts durch Anwenden der trainierten Funktion (TF) auf Eingabedaten,
wobei die Eingabedaten auf den Trainingsbilddaten (TBD) basieren,
- Anpassen (ADJ-TF) zumindest eines Parameters der trainierten Funktion (TF) basierend auf einem Vergleich des zumindest einen inhomogen deformierenden Trainingsbereichs (TREG) mit dem zumindest einen inhomogen deformierenden Vergleichsbereich (VREG),
- Bereitstellen (PROV-TF) der trainierten Funktion (TF).

13. Bereitstellungseinheit (PRVS), welche dazu ausgebildet ist, ein Verfahren nach einem der Ansprüche 1 bis 11 auszuführen.

14. Medizinisches Bildgebungsgerät, umfassend eine Bereitstellungseinheit (PRVS) nach Anspruch 13, wobei das medizinische Bildgebungsgerät zum Erfassen (CAP-BD) der medizinischen Bilddaten (BD) ausgebildet ist.

15. Computerprogrammprodukt mit einem Computerprogramm, welches direkt in einen Speicher eines Computers ladbar ist, mit Programmabschnitten, um alle Schritte des Verfahrens nach einem der Ansprüche 1 bis 11 auszuführen, wenn die Programmabschnitte von dem Computer ausgeführt werden und/oder welches direkt in einen Trainingsspeicher (TMU) einer Trainingseinheit (TRS) ladbar ist, mit Programmabschnitten, um alle Schritte des Verfahrens nach Anspruch 12 auszuführen, wenn die Programmabschnitte von der Trainingseinheit (TRS) ausgeführt werden.
